# EUROPEAN PATENT SPECIFICATION

(11) **EP 1 798 269 B1**
(45) Date of publication and mention of the grant of the patent: **24.04.2013**
(21) Application number: 04792411.3
(22) Date of filing: 07.10.2004
(51) Int. Cl.: C09D 5/00, C09D 11/06, C09F 7/02, C09D 7/12, C09D 11/02, C08L 91/00, C09F 9/00

(54) **OXIDATIVELY POLYMERIZABLE COMPOSITION**
OXIDATIV POLYMERISIERBARE MASSE
PREPARATION POLYMERISABLE PAR OXYDATION

(43) Date of publication of application: 20.06.2007
(73) Proprietor: DIC Corporation, Tokyo (JP)
(72) Inventor: KASAI, Masanori, Nerima-ku, Tokyo 177-0045 (JP); HATEMATA, Shiho, Sakado-shi, Saitama 350-0214 (JP); TAI, Kazutaka, Itabashi-ku, Tokyo 174-0051 (JP); NISHIHASHI, Hideji, Sakura-shi, Chiba 285-0817 (JP)
(74) Representative: Albrecht, Thomas
(86) International application number: PCT/JP2004/015183
(87) International publication number: WO 2006/038310

(56) References cited:
- EP-A1- 1 158 032
- EP-A1- 1 338 630
- EP-A2- 1 057 857
- JP-A- 11 323 214
- JP-A- 51 029 290
- JP-A- 2000 219 835
- JP-A- 2000 351 944
- JP-A- 2004 323 732
- JP-B1- 38 010 714
- US-A1- 2004 170 822

## Description

### TECHNICAL FIELD

The present invention relates to an oxidatively polymerizable composition used as a film-forming component such as a coating material or a printing ink.

### BACKGROUND ART

An oxidatively polymerizable composition including a drying oil or a semi-drying oil are coated or printed on various types of a base material so as to form a film on the surface thereof, and then is used for various applications including a coating material, a primer, glue, an adhesive, and a printing ink. As a drying accelerator (so-called "a dryer") which accelerates an oxidative polymerization of a drying oil, a salt of a metal such as cobalt or manganese, and an organic acid (so-called "a metal dryer") is generally used. These salts are excellent in a catalytic action to accelerate a reaction while they are known to have harmful effects on the environment and living things. Meanwhile, a metal compound having a low harmful effect, for example iron, is generally significantly poor in catalytic effects, and it is difficult to use this metal compound alone as a drying accelerator.

A lithographic sheet printing ink, which is an oxidatively polymerizable-drying ink, will be described as an example. In order to accelerate drying after printing and to obtain a practical drying rate, a salt of a metal such as cobalt, manganese, or iron; and an organic acid such as octanoic acid, naphtenoic acid, or neodecanoic acid is generally used as a metal dryer, i.e. a drying accelerator, as in EP 1 338 630. For the purpose of reducing the load to the environment hereafter, it is desired to replace a conventional metal with a metal having a high level of safety or to reduce the metal content.

Meanwhile, lacquer has been used for a long time as what uses an enzyme catalyst to accelerate an oxidative polymerization of a coating material. However, in lacquer, (p-2) valent phenols including urushiol and laccol are oxidatively polymerized by laccase which is an enzyme catalyst.

Also, Japanese Unexamined Patent Application, First Publication No. Hei 11-323258 teaches a curable composition including a metal dryer and a liquid resin obtained by polymerizing an alkyl or alkenyl derivative of monovalent phenol included in cashew nut shell liquid with a phenol oxidase (such as peroxidase, thyrosinase, or laccase). This curable composition is proposed as a material for an ink or a coating material while the curing action thereof is mainly originated from the oxidative polymerization catalytic action of a metal dryer. A phenol oxidase operates only during production of a liquid resin which is a raw material of the curable composition, but does not play a role in an oxidative polymerization action of the curable composition. Therefore, in the technique described in Japanese Unexamined Patent Application, First Publication No. Hei 11-323258, there is a problem in that a metal dryer which is thought to have harmful effects on the environment and living things cannot be reduced by using a phenol oxidase.

In this way, in an oxidatively polymerizable composition including a conventional drying oil, oxidative polymerization-based curing has been performed by using a metal dryer which is thought to have harmful effects on the environment and living things.

### DISCLOSURE OF INVENTION

An object of the present invention is to provide an oxidatively polymerizable composition which is capable of reducing the used amount of the metal dryer, which is thought to have harmful effects on the environment and living things, and of obtaining a practically sufficient polymerization rate.

The present inventors have researched an oxidative polymerization catalytic activity of various oxidases to a drying oil, a denatured product of a drying oil, a semi-drying oil, and a denatured product of a semi-drying oil, and found the following information.
(1) A lipoxidase shows a specifically high oxidative polymerization activity to a drying oil, a denatured product of the drying oil, a semi-drying oil, and a denatured product of a semi-drying oil, and this activity is not lost in the complicated system such as a printing ink or a coating material.
(2) A practical oxidative polymerization rate can be obtained by the combination of a metal dryer and a lipoxidase, and it is possible to reduce the used amount of the metal dryer to about half.
(3) In the case where an iron salt or a manganese salt of an organic acid is used, which has a low harmful effect on the environment and living things and is poor in an oxidative polymerization catalytic activity, a practically sufficient oxidative polymerization rate can be obtained by simultaneously using a lipoxidase.

The present invention has been completed on the basis of the aforementioned information.

That is, the present invention provides an oxidatively polymerizable composition including: at least one selected from the group consisting of a drying oil, a denatured product of the drying oil, a semi-drying oil, and a denatured product of the semi-drying oil (which may be described as drying oils); a lipoxidase; and a metal salt of an organic acid, i.e. a metal dryer.

The oxidatively polymerizable composition is dried and cured by oxidative polymerization at a practically sufficient rate due to synergistic interaction between a lipoxidase and a metal dryer, and is capable of reducing the used amount of the metal dryer having harmful effects on the environment and living things.

In this way, the present invention is capable of reducing the used amount of the metal dryer such as a cobalt dryer or a manganese dryer, which is thought to have harmful effects on the environment and living things, and obtains an advantageous effect in that a practically sufficient oxidative polymerization rate can be obtained. Therefore, the present invention can provide a coating material, a primer, a printing ink, and an overprint vanish (OP vanish), each having a high level of safety for the environment and for living things.

### BEST MODE FOR CARRYING OUT THE INVENTION

As a drying oil, a denatured product of a drying oil, a semi-drying oil, and a denatured product of a semi-drying oil used in the present invention, an oil and a denatured product thereof, which are normally used as a raw material for an oxidatively polymerizable printing ink or coating material, can be used without any particular limitation. Examples thereof include a linseed oil, a soy oil, a tung oil, and denatured products thereof. These may be used alone or in a combination of two or more.

A lipoxidase may originate from any one of a legume plant such as a soybean, a common bean, a pea, or a peanut; a solanaceous plant such as a potato; a cruciferous plant such as a Japanese radish; an animal; and a microorganism while a lipoxidase originating from a soybean is preferable because it is easily available.

Examples of a metal salt of an organic acid used in the present invention include a metal salt such as a cobalt salt, a manganese salt, or an iron salt, having an organic acid such as octylic acid, naphthenic acid, neo-decanoic acid, stearic acid, a resin acid, a tall oil aliphatic acid, a tung oil aliphatic acid, a linseed oil aliphatic acid, or a soy oil aliphatic acid. These salts may be used alone or in a combination of two or more.

Among these metal salts of an organic acid, an iron salt and a manganese salt are preferable from the viewpoint of safety because they have relatively low harmful effects on the environment and living things.

When an iron salt is used, it is preferable that a linseed oil and/or a denatured product thereof be also included in an oxidatively polymerization composition because an iron salt is poor in a catalytic activity. Since a linseed oil and/or a denatured product thereof is easily oxidatively polymerized, it becomes easy to obtain a practical reaction rate by simultaneously using those.

As for an oxidative polymerization-drying printing ink or a coating composition which uses an oxidatively polymerizable composition of the present invention, drying oils are generally used at 5 to 50 mass% in an ink or a coating composition while the content thereof varies depending on an application. Also, it is preferable that a metal salt of an organic acid be included at 0.01 to 0.3 mass% as the metal content in a printing ink or a coating composition. At lower than 0.01 mass% of the metal content of a metal salt of an organic acid, drying is insufficient, and at higher than 0.3 mass%, defective printability such as over emulsification tends to occur. Over emulsification is a phenomenon in which an ink is overly emulsified due to dampening water which is used during printing with a planographic ink, thereby causing defects of the ink fluidity and transferring property.

Also, it is preferable that the content of a lipoxidase included in a printing ink or a coating composition be within a range of 0.01 to 3 mass%. At lower than 0.01 mass%, any effect is hardly confirmed, and at more than 3 mass%, the improvement of a drying-accelerating effect is so small that there is no need to add a lipoxidase more than the aforementioned range. It is more preferable that a lipoxidase be used at 0.02 to 1 mass%.

As for an oxidative polymerization-drying printing ink or a coating composition which uses an oxidatively polymerizable composition of the present invention, it is preferable that a linseed oil and/or a denatured product thereof be included at 5 to 40 mass% in an ink or a coating composition. At lower than 5 mass%, a drying accelerating effect is small, and at more than 40 mass%, there is a possibility to have a negative effect on printability or coatability. It is more preferable that a linseed oil and/or a denatured product thereof be included at 15 to 30 mass%.

### EXAMPLES

Hereinafter, the present invention will be described in detail by way of Examples and Comparative Examples, but the present invention is not limited thereto. In Examples, parts and % are used as a mass standard unless otherwise described. The present invention is not limited to each of Examples, and for example, constitutional elements of Examples may be appropriately combined.

### Preparation of oxidatively polymerizable compounds in Examples 1 and 2

An oxidatively polymerizable compound was prepared by mixing the following (a) and (b), in which their total content was 100 parts by mass, and adding thereto a lipoxidase and each of the used metal salts at predetermined amounts, and then uniformly dispersing them with a planetary stirring machine.

### Confirmation method of drying property

A confirmation of a drying property was performed by coating a sample on a glass plate so as to form a uniform film, followed by observing the curing situation of the film due to oxidative polymerization drying by using a physical pendulum type property tester RPT-3000 produced by A&D Co., Ltd. In this tester, a knife edge is formed in the coated film, and the edge head is put to a glass plate so as to form a supporting point, a vibration is given to the pendulum united with the knife edge, and then the curing process of the sample is evaluated by analyzing the vibration. A vibration cycle of a pendulum is dependent on a reticulation size which is decided by the degree of a crosslink based on the reaction of resins in a film. When there are few crosslinks and the reticulation size is large, the cycle value of a physical pendulum is large. When a crosslink reaction proceeds and the reticulation size becomes small, the vibration distance becomes short, and the cycle value becomes small. In the oxidatively polymerizable composition used in the present test, the variation of a cycle value is small before a crosslink reaction starts, and the decrease of a cycle value becomes large when a crosslink reaction starts to proceed. In a time-cycle value graph, the time period from zero to the time point when the cycle value steeply starts to decrease (i.e. the shape of a graph becomes shoulder-like) was referred to as an induction period. The short induction period indicates that catalytic activation is high and that the starting time of a crosslink reaction is early, in other words, drying is fast.

### Example 1: Manganese type drying accelerator

In Example 1, the advantageous effects of simultaneous use of a manganese type drying accelerator and a lipoxidase were confirmed.

(1) A light oil solution of manganese naphthenate in which a metal content is 6% (described as Mn-6) and (2) a lipoxidase were added to and mixed with the aforementioned oxidatively polymerizable composition at a ratio described in Table 1. Then, the induction period was measured by using a physical pendulum type viscometer. The additional amounts of the manganese naphthenate solution (the ratio in the whole oxidatively polymerizable composition) were 0% (no addition), 1%, and 2% (three points). The additional amounts of the lipoxidase were 0.073% and 0.145% (two points). In Comparative Example 1, the lipoxidase was not added. The measurement results are described in Table 1.

**Table 1 Measurement results by using physical pendulum type viscometer in Example 1 (induction period: min)**

| | | Example 1-1 | Example 1-2 | Comparative Example 1 |
|---|---|---|---|---|
| Lipoxidase | | 0.073% | 0.145% | No addition |
| Mn-6 | 0% | 200 or more | 200 or more | 200 or more |
| Mn-6 | 1% | 59 | 49 | 62 |
| Mn-6 | 2% | 38 | 30 | 57 |

According to Table 1, it was found that the sample with the combination of 1% of Mn-6 (manganese: 0.06%) and 0.073% of the lipoxidase showed almost the same induction period and the same or more drying and curing properties as those of the sample in which 2% of Mn-6 was added. Therefore, it was found that simultaneous use of a lipoxidase can largely reduce the content of a manganese salt of an organic acid, which is required to obtain an appropriate drying property, to about half.

### Example 2: Iron type drying accelerator

In Example 2, the advantageous effects of simultaneous use of an iron type drying accelerator and an enzyme catalyst were confirmed.

(1) A light oil solution of iron naphthenate in which the metal content is 6% (described as Fe-6) and (2) a lipoxidase were added to and mixed with the aforementioned oxidatively polymerizable composition at a ratio described in Table 2. Then, the cycle was measured by using a physical pendulum type viscometer. The additional amounts of the iron naphthenate solution (the ratio in the whole oxidatively

polymerizable composition) were 0% (no addition), 1%, and 2% (three points). The additional amounts of the lipoxidase were 0.073% and 0.145% (two points). In Comparative Example 2, the lipoxidase was not added. The measurement results are described in Table 1.

**Table 2 Measurement results by using physical pendulum type viscometer in Example 2 (induction period: min)**

| | | Example 2-1 | Example 2-2 | Comparative Example 2 |
|---|---|---|---|---|
| Lipoxidase | | 0.073% | 0.145% | No addition |
| Fe-6 | 0% | 200 or more | 200 or more | 200 or more |
| Fe-6 | 1% | 111 | 95 | 200 or more |
| Fe-6 | 2% | 79 | 60 | 109 |

According to Table 2, it was found that the samples with only 1% of Fe-6 or only 0.145% of the lipoxidase showed the required induction period of 200 min or more, indicating slow drying. In contrast, it was found in the sample in which both were simultaneously used that the induction period was shortened to 111 min and that drying and curing properties were synergistically improved. It was found that the sample with the combination of 1% of Fe-6 (iron: 0.06%) and 0.073% of the lipoxidase showed the almost same induction period and the same or more drying and curing properties as those of the sample in which 2% of Fe-6 was added. While the catalytic activity of iron itself is significantly low, almost the same induction period as that of manganese can be obtained by simultaneously using a lipoxidase.

### Example 3: Oxidative polymerization-drying printing ink composition

In Example 3, the advantageous effects of simultaneous use of an iron salt of an organic acid and/or a manganese salt of an organic acid, and a lipoxidase in an oxidative polymerization-drying printing ink composition were confirmed. The printing ink composition used in the present example was prepared by uniformly mixing and dispersing the following by using a triple roll mill:
(1) a red base ink produced by Dainippon Ink & Chemicals, Inc. (the composition of planographic sheet ink Values-G (trade name) in which a dryer (drying accelerator) and an antioxidant are removed) ...99 parts by mass,
(2) hydroquinone ...0.15 parts by mass, and
(3) the predetermined amount of a lipoxidase and the predetermined amount of each of the used metal salts.

Then, the drying test of the prepared ink was performed in accordance with the method described in "4. 4 drying property" of JIS K5701-1 "planographic ink test method (first part)" by using a C-type drying tester (Choyokai-type parchment paper drying tester). The drying property evaluation of the drying test in accordance with the aforementioned JIS K5701-1 was performed by measuring the drying time with the following method:
(1) printing a test ink on a parchment paper so as to form a thickness of 1.5 µm ± 0.5 µm,
(2) laminating a filler paper cord on the printed surface of the parchment paper and then winding it on the drum of a C-type drying tester, and
(3) rotating the drum at 0.1 rpm and pressurizing it from the top of the filler paper cord by using a pressure gear, wherein the time until the filler paper cord did not take an ink was a drying time,
(4) the weight of the pressure gear was 7.36 N, the atmosphere temperature was 25°C, 35°C, or 50°C, the humidity was 50% or 60%, and the drum had a diameter of 103 mm and a length of 300 mm.

**Table 3 Drying test results (unit of drying time: min)**

| | | |
|---|---|---|
| Example 3-1 | Mn-6: 0.25%, Lipoxidase: 0.037% | 370 |
| Example 3-2 | Mn-6: 0.25%, Lipoxidase: 0.074% | 210 |
| Example 3-3 | Mn-6: 0.125%, Fe-6: 0.5, Lipoxidase: 0.16% | 230 |
| Comparative Example 3-1 | Mn-6: 0.5%, Lipoxidase: 0% | 200 |
| Comparative Example 3-2 | Fe-6: 0.5%, Lipoxidase: 0% | 1,000 or more |
| Comparative Example 3-3 | No drying accelerator, Lipoxidase: 0% | 1,000 or more |

It is necessary in practical use of a printing ink that the drying time on the parchment paper is generally 500 min or less under the measurement conditions of the present examples. As described in Table 3, as far as manganese is concerned, the drying time was within the range of 500 min or less by simultaneously using lipoxidase even though the used amount of the metal component was reduced to a half of the conventional amount (Example 3-1). Also, in the case where the three components including a small amount of manganese, iron, and lipoxidase were added, a favorable drying property was obtained (Example 3-3).

### Example 4: Effects of difference of kinds of oils

In Example 4, the effects of difference of kinds of oils in an oxidative polymerization-drying printing ink composition were confirmed. The printing ink composition used in the present example was prepared by uniformly mixing and dispersing the following on a glass plate by using a spatula:
(1) a red flash base produced by Dainippon Ink & Chemicals, Inc....50 parts by mass,
(2) any one of a tung oil, a soy oil, and a linseed oil...0.15 parts by mass, and
(3) the predetermined amount of a lipoxidase and the predetermined amount of each of the used metal salts.

Then, the drying test of the prepared ink was performed in accordance with the method described in "4. 4 drying property" of JIS K5701-1 "planographic ink test method (first part)" by using a C-type drying tester (Choyokai-type parchment paper drying tester).

In consideration of the difference of catalytic activities of manganese and iron, the measurement for a manganese-containing ink was performed under the conditions of an atmosphere temperature of 35°C and a humidity of 50%, and the measurement for an iron-containing ink was performed under the conditions of an atmosphere temperature of 50°C and a humidity of 50% in order to accelerate drying. A parchment paper was used as a vehicle paper.

**Table 4 Drying test results (unit of drying time: min)**

| | | | | |
|---|---|---|---|---|
| Example 4-1 | tung oil | Mn-6: 0.25%, Lipoxidase: 0.075% | 140 | 35°C |
| Example 4-2 | linseed oil | Mn-6: 0.25%, Lipoxidase: 0.075% | 400 | |
| Example 4-3 | soy oil | Mn-6:0.25%, Lipoxidase: 0.075% | 1420 | |
| Example 4-4 | tung oil | Fe-6: 2%, Lipoxidase: 0.15% | 180 | 50°C |
| Example 4-5 | linseed oil | Fe-6: 2%, Lipoxidase: 0.15% | 1050 | |
| Example 4-6 | soy oil | Fe-6: 4%, Lipoxidase: 0.15% | 4400 | |
| Comparative Example 4-1 | tung oil | Mn-6: 0.25% | 240 | 35°C |
| Comparative Example 4-2 | linseed oil | Mn-6:0.25% | 540 | |
| Comparative Example 4-3 | soy oil | Mn-6: 0.25% | 1760 | |
| Comparative Example 4-4 | tung oil | Fe-6: 2% | 360 | 50°C |
| Comparative Example 4-5 | linseed oil | Fe-6: 2% | 1120 | |
| Comparative Example 4-6 | soy oil | Fe-6: 4% | 4560 | |

According to Table 4, it was found that the drying times were shortened by adding a lipoxidase in the every sample using a tung oil, a linseed oil, or a soy oil when Mn-6 was used (Examples 4-1, 4-2, and 4-3, and Comparative Examples 4-1, 4-2 and 4-3). In other words, it was found that the advantageous effects of the addition of a lipoxidase can be obtained in a manganese salt of an organic acid such as Mn-6 regardless of difference of kinds of oils.

Meanwhile, it was found that the drying time was largely shortened by adding a lipoxidase in the sample using a tung oil when Fe-6 was used (see Example 4-4 and Comparative Example 4-4.). In the case of a transition metal compound having low catalytic activity such as Fe-6, it is preferable that an easily oxidatively polymerizable drying oil such as a tung oil be added when lipoxidase is simultaneously used. Example 5: Effects of additional amount of tung oil when iron naphthenate is used.

In Example 5, the effects of the additional amount of a tung oil in an oxidative polymerization-drying printing ink composition was confirmed when iron naphthenate was used. The printing ink composition used in the present example was prepared by uniformly mixing and dispersing the following on a glass plate by using a spatula:
(1) a red flash base produced by Dainippon Ink & Chemicals, Inc....50 parts by mass,
(2) the predetermined amounts of a tung oil and a linseed oil ...total 50 parts by mass, and
(3) the predetermined amount of a lipoxidase, and
(4) the predetermined amount of a iron naphthenate solution (Fe-6) with a metal content of 6%.

Then, the drying test of the prepared ink was performed in accordance with the method described in "4. 4 drying property" of JIS K5701-1 "planographic ink test method (first part)" by using a C-type drying tester (Choyokai-type parchment paper drying tester) under the conditions of an atmosphere temperature of 35°C and a humidity of 50%. A parchment paper was used as a vehicle paper.

**Table 5 Drying test results (unit of drying time: min)**

| | Tung oil [parts] | Linseed oil [parts] | Fe-6 [parts] | Lipoxidase [parts] | Drying time [min] |
|---|---|---|---|---|---|
| Example 5-1 | 40 | 10 | 2 | 0.15 | 380 |
| Example 5-2 | 20 | 30 | 2 | 0.15 | 520 |
| Example 5-3 | 10 | 40 | 2 | 0.15 | 860 |
| Example 5-4 | 5 | 45 | 2 | 0.15 | 1520 |
| Comparative Example 5-1 | 40 | 10 | 2 | - | 620 |
| Comparative Example 5-2 | 20 | 30 | 2 | - | 680 |
| Comparative Example 5-3 | 10 | 40 | 2 | - | 940 |
| Comparative Example 5-4 | 5 | 45 | 2 | - | 1,600 or more |

When Fe-6 was used, it was found that the drying time was shortened by adding lipoxidase in the case where the content of a tung oil was 5 to 40 mass%. In particular, the advantageous effect due to the addition of lipoxidase was significant in the case where the content of a tung oil was 10 mass% or more.

### INDUSTRIAL APPLICABILITY

The present invention is capable of reducing the used amount of a metal dryer such as a cobalt dryer or a manganese dryer, which is thought to have harmful effects on the environment and living things, and obtains an advantageous effect in that a practically sufficient oxidative polymerization rate can be obtained. Therefore, the present invention can provide a coating material, a primer, a printing ink, and an overprint vanish (OP vanish), each having a high level of safety for the environment and for living things.

## Claims

1. An oxidatively polymerizable composition comprising:
at least one selected from the group consisting of a drying oil, a denatured product of the drying oil, a semi-drying oil, and a denatured product of the semi-drying oil;
a lipoxidase; and
a metal salt of an organic acid.

2. An oxidatively polymerizable composition according to claim 1, wherein the metal salt of the organic acid is at least one selected from the group consisting of an iron salt of the organic acid and a manganese salt of the organic acid.

3. An oxidatively polymerizable composition according to claim 1, further comprising at least one selected from the group consisting of a tung oil and a denatured product of the tung oil.

4. An oxidatively polymerizable, printing ink composition comprising:
an oxidatively polymerizable composition according to any one of claims 1-3, wherein
the lipoxidase is contained at 0.01 to 3 mass% per the total amount of the ink composition, and
the metal salt of an organic acid is contained at 0.01 to 0.3 mass% as a metal content per the total amount of the ink composition.

## Patentansprüche

1. Oxidativ polymerisierbare Zusammensetzung, umfassend:
wenigstens eines, ausgewählt aus der Gruppe, bestehend aus einem Trockenöl, einem denaturierten Produkt des Trockenöls, einem halbtrocknenden Öl und einem denaturierten Produkt des halbtrocknenden Öls;
eine Lipoxidase; und
ein Metallsalz einer organischen Säure.

2. Oxidativ polymerisierbare Zusammensetzung gemäß Anspruch 1, wobei das Metallsalz der organischen Säure wenigstens eines ist, dass aus der Gruppe, bestehend aus einem Eisensalz der organischen Säure und einem Mangansalz der organischen Säure, ausgewählt ist.

3. Oxidativ polymerisierbare Zusammensetzung gemäß Anspruch 1, die außerdem wenigstens eines, ausgewählt aus der Gruppe, bestehend aus einem Tungöl und einem denaturierten Produkt des Tungöls, umfasst.

4. Oxidativ polymerisierbare Drucktintenzusammensetzung, umfassend:
eine oxidativ polymerisierbare Zusammensetzung gemäß einem der Ansprüche 1-3, wobei
die Lipoxidase mit 0,01 bis 3 Massen%, bezogen auf die Gesamtmenge der Tintenzusammensetzung, enthalten ist und
das Metallsalz einer organischen Säure mit 0,01 bis 0,3 Massen% als Metallgehalt, bezogen auf die Gesamtmenge der Tintenzusammensetzung, enthalten ist.

## Revendications

1. Une composition polymérisable par oxydation, comprenant:
au moins un élément choisi dans le groupe constitué par une huile siccative, un produit dénaturé de l'huile siccative, une huile semi-siccative et un produit dénaturé de l'huile semi-siccative;
une lipoxydase et
un sel métallique d'un acide organique.

2. La composition polymérisable par oxydation selon la revendication 1, dans laquelle le sel métallique de l'acide organique est au moins un sel choisi dans le groupe constitué par un sel de fer de l'acide organique et un sel de manganèse de l'acide organique.

3. La composition polymérisable par oxydation selon la revendication 1, comprenant en outre au moins un élément choisi dans le groupe constitué par une huile de tung et un produit dénaturé de l'huile de tung.

4. Une composition d'encre d'impression polymérisable par oxydation, comprenant:
une composition polymérisable par oxydation selon l'une quelconque des revendication 1 à 3, dans laquelle
la lipoxydase est contenue à raison de 0,01 à 3% en masse par la quantité totale de la composition d'encre, et
le sel métallique d'un acide organique est contenu à raison de 0,01 à 0,3% en masse comme teneur de métal par la quantité totale de la composition d'encre.
